# EUROPÄISCHE PATENTSCHRIFT

(11) **EP 1 364 141 B1**
(45) Veröffentlichungstag und Bekanntmachung des Hinweises auf die Patenterteilung: **15.09.2004**
(21) Anmeldenummer: 02706681.0
(22) Anmeldetag: 12.02.2002
(51) Int. Cl.: F16H 61/00

(54) **MECHATRONISCHE GETRIEBEANORDNUNG FÜR KRAFTFAHRZEUGE**
MECHATRONIC TRANSMISSION ARRANGEMENT FOR MOTOR VEHICLES
ENSEMBLE TRANSMISSION MECATRONIQUE POUR VEHICULES AUTOMOBILES

(30) Priorität: 02.03.2001 DE 10110257
(43) Veröffentlichungstag der Anmeldung: 26.11.2003
(73) Patentinhaber: SIEMENS AKTIENGESELLSCHAFT, 80333 München (DE)
(72) Erfinder: FISCHER, Georg, 93049 Regensburg (DE); LINCKE, Christoph, 93047 Regensburg (DE); LOIBL, Josef, 93077 Bad Abbach (DE); SCHEUERER, Ulf, 93047 Regensburg (DE)
(86) Internationale Anmeldenummer: PCT/DE2002/000506
(87) Internationale Veröffentlichungsnummer: WO 2002/070922

(56) Entgegenhaltungen:
- WO-A-01/13011
- DE-A- 19 821 897
- DE-C- 19 826 588
- PATENT ABSTRACTS OF JAPAN vol. 1995, no. 01, 28. Februar 1995 (1995-02-28) -& JP 06 294461 A (SAWAFUJI ELECTRIC CO LTD), 21. Oktober 1994 (1994-10-21)

## Beschreibung

Die Erfindung betrifft eine mechatronische Getriebeanordnung für Kraftfahrzeuge mit den im Oberbegriff des Anspruches 1 angegebenen Merkmalen.

Zum Hintergrund der Erfindung ist festzuhalten, dass bei modernen Konstruktionen von Kraftfahrzeug-Automatikgetrieben in zunehmendem Maße die elektronischen Komponenten zur Getriebesteuerung in das Getriebe integriert werden. Die Motivation hierfür liegt in der höheren Zuverlässigkeit und den niedrigeren Kosten dieser Bauart, was auf den Wegfall von elektrischen und mechanischen Verbindungen beruht.

Bei der vorher üblichen Bauweise bei Automatikgetrieben befanden sich die zur Getriebesteuerung benötigten Aktuatoren, wie z. B. elektrohydraulische Drucksteller, und Sensoren, z. B. für die Erfassung von Drehzahl, Druck, Position des Wählhebels, Temperatur des Getriebeöls usw., im oder am Getriebe, wo sie unabhängig voneinander verbaut wurden. Die außerhalb des Getriebes und davon entfernt installierte elektronische Steuerung des Getriebes wurde dann über Kabel und Steckverbinder mit den Aktuatoren und Sensoren verbunden. Es wurden also aufwendige Einzelkopplungen zwischen den Ein- und Ausgängen der Steuerung und den entsprechenden Aktuatoren und Sensoren hergestellt.

Bei einer mechatronischen Getriebeanordnung sind nun die eigentliche elektronische Steuerung, die in der Regel einen Mikrocontroller und entsprechende Speicher enthält, und die Sensoren zur Erfassung wesentlicher Zustände und Parameter des Getriebes gemeinsam in einem Gehäuse verbaut. Dieses Mechatronikbauteil wird dann beim Zusammenbau des Getriebes im Getriebegehäuse montiert, wodurch die eingangs erwähnten Anschlussarbeiten zwischen Sensoren und Getriebesteuerung entfallen. In herstellungstechnisch besonders einfacher und einsatztechnisch besonders robuster Weise können nämlich die Elektronikbauteile der Getriebesteuerung einerseits und die Sensoren andererseits mit ihrer Verdrahtung zur Getriebesteuerung auf einer gemeinsamen Leiterplatte im Mechatronikbauteil angeordnet sein.

In der Regel ist im Mechatronikbauteil nun mindestens ein Positionssensor angeordnet, der der Erfassung der Position eines bestimmten Getriebeteils dient. So ist es beispielsweise von großer Wichtigkeit für den zuverlässigen und störungsfreien Betrieb eines Getriebes, dass mittels eines Sensors die Position eines verschiebbaren Getriebeteils, wie z. B. des vom Fahrer manuell betätigbaren Wählschiebers oder des hydraulischen Handschaltventils des Getriebes, exakt erfasst wird. Demzufolge ist die Positionierung des Sensors relativ zum Getriebe ausschlaggebend für die Genauigkeit der Positionserfassung. Diese Problematik besteht dabei gleichermaßen bei rotatorisch wie linear auszurichtenden Sensoren. Auch bei Sensoren, beispielsweise für die Drehzahlerfassung des Getriebes, ist eine genaue Positionierung des Sensors relativ zur Getriebemechanik wichtig für eine sichere und zuverlässige Funktion.

Die Justierung der Sensoren wurde bisher bei nichtmechatronischen Anordnungen über ihre Anschraubpunkte (in der Regel) am Getriebegehäuse vorgenommen. Dabei war es erforderlich, alle Sensoren einzeln und unabhängig voneinander in ihrer Position zu justieren, was natürlich einen erheblichen Arbeitsaufwand mit sich brachte. So mussten allein die Positionssensoren zur Erfassung des am Getriebe eingestellten Fahrmodus durch Detektion der entsprechenden Position des manuell betätigbaren Wählschiebers nach jeder Anbringung am Getriebe einzeln so justiert werden, dass das elektrische Ausgangssignal der Sensoren mit dem jeweils mechanisch eingestellten Fahrmodus übereinstimmt.

Die Schrift WO-A-0113011 offenbart hierbei die Merkmale des Oberbegriffs des unabhängigen Anspruchs 1.

Der Erfindung liegt nun die Aufgabe zugrunde, eine mechatronische Getriebeanordnung so auszugestalten, dass eine exakte, dabei jedoch rationell durchführbare Positionsjustierung der im Mechatronikbauteil untergebrachten Sensoranordnung(en) zu ermöglichen.

Diese Aufgabe wird durch die im Kennzeichnungsteil des Anspruches 1 angegebenen Merkmale gelöst. Demnach ist eine positionsflexible Lagerung der mindestens einen Sensoranordnung im Mechatronikgehäuse vorgesehen. Dies bedeutet, dass die einzelnen Sensoren für sich oder in einer oder mehreren Gruppen gemeinsam beweglich relativ zum Mechatronikgehäuse gelagert sind. Für eine genaue Positionsjustierung ist eine entsprechende Positionsjustierungseinrichtung vorgesehen, die zwischen Sensoranordnung und Getriebegehäuse unter Durchgriff durch das Mechatronikgehäuse wirksam ist. Bevorzugtermaßen handelt es sich bei diesen Positionsjustiereinrichtungen um mechanisch wirksame Zentrier-, Passstifte, Zapfen oder dergleichen an der Sensoranordnung bzw. am Getriebegehäuse, die mit einer entsprechenden Justieröffnung am Getriebegehäuse bzw. der Sensoranordnung eingreift. Schließlich ist eine Fixiereinrichtung vorgesehen, die die Sensoranordnung im Mechatronikgehäuse in ihrer relativ zum Getriebegehäuse justierten Position festlegt.

Aufgrund dieser konstruktiven Ausgestaltung erfolgt eine quasi "automatische" Justierung der Sensoranordnung bzw. der jeweiligen Sensoren gegenüber den zu überwachenden Bauteilen, so dass sich der eigentliche Justageaufwand erheblich erniedrigt. Durch die positionsflexible Lagerung und anschließende Fixierung der Sensoranordnung wird dann innerhalb des Mechatronikgehäuses die Solllage der Sensoren dauerhaft festgelegt.

Weitere bevorzugte Ausführungsformen der Erfindung ergeben sich aus den Unteransprüchen. Einzelheiten und Vorteile davon sind der nachfolgenden Beschreibung entnehmbar, in der Ausführungsbeispiele des Erfindungsgegenstandes anhand der beigefügten Zeichnungen näher erläutert werden. Es zeigen:
- Fig. 1: eine ausschnittsweise Draufsicht auf eine mechatronische Getriebeanordnung in einer ersten Ausführungsform,
- Fig. 2: einen Schnitt durch die Getriebeanordnung entlang der Schnittlinie II-II nach Fig. 1,
- Fig. 3: eine ausschnittsweise Draufsicht auf eine mechatronische Getriebeanordnung in einer zweiten Ausführungsform, sowie
- Fig. 4 und 5: Detailschnitte der Getriebeanordnung entlang den Schnittlinien IV-IV bzw. V-V nach Fig. 3.

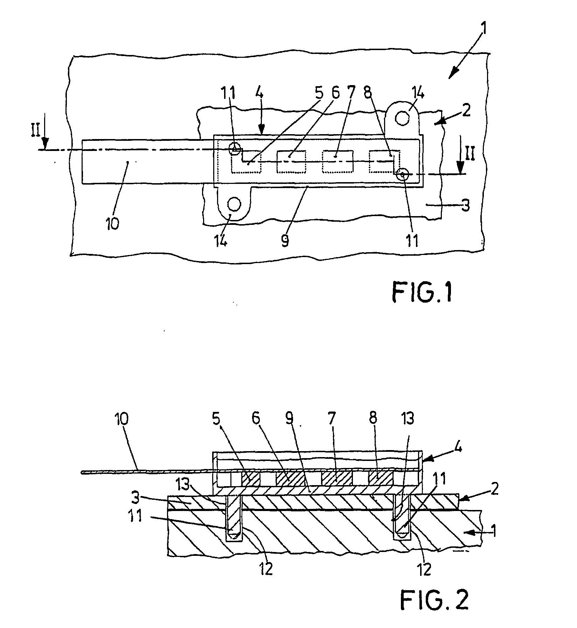

Wie aus den Fig. 1 und 2 deutlich wird, gehören zu der mechatronischen Getriebeanordnung ein Getriebegehäuse 1, bei dem es sich beispielsweise um die sogenannte "Hydraulikplatte" eines Automatikgetriebes handeln kann. Auf dem Getriebegehäuse 1 ist durch nicht näher dargestellte Fixierelemente ein Mechatronikbauteil 2 montiert, das in seinem Mechatronikgehäuse 3 eine nicht näher dargestellte elektronische Steuerung auf Mikroprozessorbasis sowie eine Sensoranordnung 4 mit mehreren linear hintereinander gereihten Sensoren 5, 6, 7, 8 beherbergt. Die Sensoranordnung 4 weist dabei ein Gehäuse 9 auf, in dem die Sensoren 5 bis 8 lagestabil untergebracht sind. Die messtechnisch-elektronische Anbindung der Sensoren 5, 6, 7, 8 an die nicht näher dargestellte Steuerung des Mechatronikbauteils 2 erfolgt über eine streifenförmige, flexible Leiterplatte 10, auf der in nicht näher dargestellter Weise elektrische Leiterbahnen zu den Sensoren 5 bis 8 in üblicher Weise aufgebracht sind.

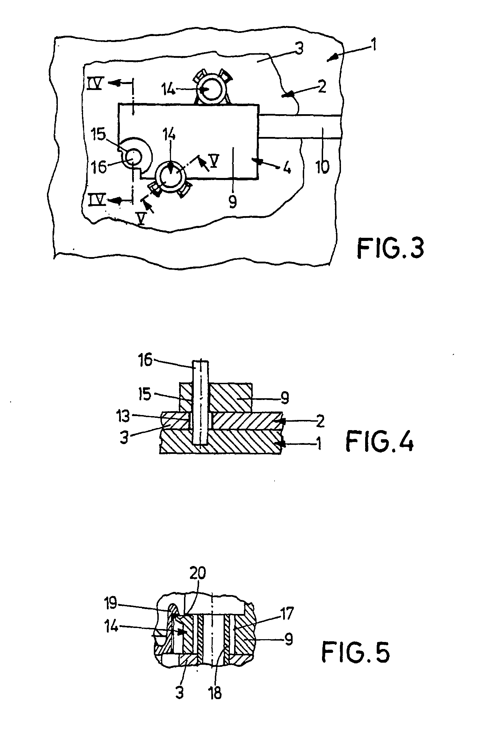

Wie insbesondere aus Fig. 2 deutlich wird, weist das Sensorgehäuse 9 an seiner dem Getriebegehäuse 1 zugewandten Seite zwei einstückig angeformte Zentrierstifte 11 auf, die gemeinsam mit entsprechenden passgenauen Justieröffnungen 12 im Getriebegehäuse 1 eine als ganzes mit 13 bezeichnete Positionsjustiereinrichtung bilden. Die Zentrierstifte 11 durchgreifen dabei über gegenüber ihrer Außenkontur deutlich größere Durchgriffsöffnungen 13 das Mechatronikgehäuse 3. Durch den Eingriff der Zentrierstifte 11 in die Justieröffnungen 12 wird die Lage der Sensoren 5 bis 8 gegenüber dem Getriebe exakt festgelegt, wobei sich das Sensorgehäuse 9 relativ zum Mechatronikgehäuse 3 in seiner Position flexibel bewegen kann. Nach der erfolgten Justage, wie sie in Fig. 2 dargestellt ist, wird dann über Anschraubösen 14 am Sensorgehäuse 9 die Sensoranordnung 4 in der justierten Position am Mechatronikgehäuse 3 festgelegt. Die Ausgestaltung der Anschraubösen 14 ist im übrigen anhand des Ausführungsbeispiels gemäß den Fig. 3 bis 5 zu erläutern, worauf verwiesen wird.

Bei dieser zweiten Ausführungsform ist wiederum ein Getriebegehäuse 1 vorgesehen, auf dem ein Mechatronikbauteil 2 mit einer darin sitzenden Sensoranordnung 4 vorhanden sind. An dem Sensorgehäuse ist in diesem Falle allerdings eine Zentrierbohrung 15 vorgesehen, durch die ein im Getriebegehäuse 1 verankerter Passstift 16 eingreift. Letzterer durchgreift wieder eine entsprechende Durchgriffsöffnung 13 im Mechatronikgehäuse 3, wie aus Fig. 4 deutlich wird. Aufgrund der gegenseitigen Lagefestlegung zwischen Sensoranordnung 4 und Getriebegehäuse 1 mit Hilfe der Zentrierbohrung 15 und des Passstiftes 16 können wiederum die Positionen der in der Sensoranordnung 4 integrierten Sensoren (nicht dargestellt in Fig. 3 bis 5) lagegenau festgelegt werden. Dabei ist das Sensorgehäuse 9 im Mechatronikgehäuse 3 durch die positionsflexible Lagerung mit Hilfe der Anschraubösen 14 (Fig. 5) grob festgelegt. Dazu weisen die seitlich vom Sensorgehäuse 9 abstehenden, einstückig daran angeformten Anschraubösen 14 Augen 17 auf, die gegenüber der am Mechatronikgehäuse ortsfest angeordneten Innengewindehülse 18 einen deutlich größeren Innendurchmesser aufweisen. Ferner sind an das Mechatronikgehäuse 3 Fanghaken 19 einstückig angeformt, die entsprechende Vorsprünge 20 an den Anschraubösen 14 übergreifen und somit eine provisorische Fixierung der Sensoranordnung 4 im Mechatronikgehäuse 3 gewährleisten. Der gegenseitige Eingriff von Fanghaken 19 und Anschraubösen 14 ist jedoch so gestaltet, dass eine seitliches Spiel vorhanden ist. Dadurch kann sich das Sensorgehäuse 9 relativ zum Mechatronikgehäuse 3 während der Justierung mit Hilfe von Zentrierbohrung 15 und Passstift 16 verschieben. Nach erfolgter Justage wird in die Innengewindehülse 18 eine nicht dargestellte Befestigungsschraube eingedreht, die die Anschrauböse und damit die Sensoranordnung 4 dauerhaft und in der justierten Position im Mechatronikgehäuse 3 festlegt.

Für die lageflexible Positionierung der Sensoranordnung 4 relativ zu der im Mechatronikgehäuse 3 sitzenden Steuerung der mechatronischen Getriebeanordnung ist wiederum eine flexible Leiterplatte 10 zur Anbindung der Sensoren vorgesehen.

## Patentansprüche

1. Mechatronische Getriebeanordnung für Kraftfahrzeuge umfassend
- ein Getriebegehäuse (3) für ein Kraftfahrzeuggetriebe,
- ein auf dem Getriebegehäuse montierbares Mechatronikbauteil (2) mit einem Mechatronikgehäuse (3), und
- eine im Mechatronikbauteil (2) untergebrachte Sensoranordnung (4) mit einem oder mehreren Sensoren (5, 6, 7, 8), die relativ zu einem zu überwachenden Getriebebauteil positionierbar sind,
**gekennzeichnet durch**
- eine positionsflexible Lagerung (17, 19) der Sensoranordnung (4) im Mechatronikgehäuse (3),
- eine Positionsjustiereinrichtung (13), die zwischen Sensoranordnung (4) und Getriebegehäuse (1) unter Durchgriff **durch** das Mechatronikgehäuse (3) wirksam ist, und
- eine Fixiereinrichtung (18) zur Fixierung der Sensoranordnung (4) im Mechatronikgehäuse (3) in ihrer relativ zum Getriebegehäuse (1) justierten Position.

2. Getriebeanordnung nach Anspruch 1, **dadurch gekennzeichnet, dass** die Sensoranordnung (4) über eine flexible Leiterplatte (10) an eine Steuerungsschaltung der Mechatronik angebunden ist.

3. Getriebeanordnung nach Anspruch 1 oder 2, **gekennzeichnet durch** eine positionsflexible Lagerung der Sensoranordnung erlaubende, letztere beaufschlagende Klemmelemente (19, 20) am Mechatronikgehäuse (3).

4. Getriebeanordnung nach einem der Ansprüche 1 bis 3, **gekennzeichnet durch** mindestens einen Zentrierstift (11) an der Sensoranordnung (4), der unter Durchgriff **durch** eine Öffnung (13) im Mechatronikgehäuse (3) in eine entsprechende Justieröffnung (12) am Getriebegehäuse (1) eingreift.

5. Getriebeanordnung nach einem der Ansprüche 1 bis 3, **gekennzeichnet durch** mindestens einen Zentrierstift (16) am Getriebegehäuse (1), der unter Durchgriff **durch** eine Öffnung (13) im Mechatronikgehäuse (3) in eine entsprechende Justieröffnung (15) an der Sensoranordnung (4) eingreift.

6. Getriebeanordnung nach einem der Ansprüche 1 bis5, **gekennzeichnet durch** Anschraubösen (14) am Sensorgehäuse (9), die mit dem Mechatronikgehäuse (3) verbindbare Schraubbolzen unter Justagespiel umgreifen.

## Claims

1. Mechatronic transmission arrangement for motor vehicles, comprising
- a transmission casing (1) for a motor vehicle transmission,
- a mechatronic component (2) which can be mounted on the transmission casing and has a mechatronic housing, and
- a sensor arrangement (4) which is accommodated in the mechatronic component (2) and has one or more sensors (5, 6, 7, 8) which can be positioned relative to a transmission component to be monitored,
**characterised by**
- a flexibly positionable mounting (17, 19) of the sensor arrangement (4) in the mechatronic housing(3),
- a position adjusting device (13) which is effective between the sensor arrangement (4) and the transmission casing (1) while passing through the mechatronic housing (3), and
- a fixing device (18) for fixing the sensor arrangement (4) in the mechatronic housing (3) in its position adjusted relative to the transmission casing (1).

2. Transmission arrangement according to Claim 1,
**characterised in that** the sensor arrangement (4) is connected to a control circuit of the mechatronics via a flexible printed circuit board (10).

3. Transmission arrangement according to Claim 1 or 2,
**characterised by** clamping elements (19, 20) on the mechatronic housing (3) which permit flexibly positionable mounting of the sensor arrangement and act upon said sensor arrangement.

4. Transmission arrangement according to one of Claims 1 to 3,
characterised b y at least one centring pin (11) on the sensor arrangement (4), said centring pin engaging in a corresponding adjusting opening (12) on the transmission casing (1) and passing through an opening (13) in the mechatronic housing(3).

5. Transmission arrangement according to one of Claims 1 to 3,
**characterised by** at least one centring pin (16) on the transmission casing (1), said centring pin engaging in a corresponding adjusting opening (15) on the sensor arrangement (4) and passing through an opening (13) in the mechatronic housing(3).

6. Transmission arrangement according to one of Claims 1 to 5,
**characterised by** screw eyes (14) on the sensor housing (9), said screw eyes engaging with screw bolts which can be connected with the mechatronic housing (3) with clearance for adjustment.

## Revendications

1. Dispositif mécatronique de boîte de vitesse pour véhicules automobiles, comportant
- un carter de boîte de vitesse (3) pour une boîte de vitesse de véhicule automobile,
- un composant mécatronique (2) pouvant être monté sur le carter de boîte de vitesse (3) et comportant un boîtier mécatronique (3), et
- un dispositif de capteurs (4) placé dans le composant mécatronique (2), comportant un ou plusieurs capteurs (5, 6, 7, 8) qui peuvent être positionnés par rapport à un composant de boîte de vitesse à surveiller,
**caractérisé par**
- un appui (17, 19), flexible en position, du dispositif de capteurs (4) dans le boîtier mécatronique (3),
- un dispositif d'ajustage de position (13), qui est actif entre le dispositif de capteurs (4) et le carter de boîte de vitesse (1) par pénétration au travers du boîtier mécatronique (3), et
- un dispositif de fixation (18), destiné à fixer le dispositif de capteurs (4) dans le carter mécatronique (3), dans sa position relative ajustée par rapport au carter de boîte de vitesse (1).

2. Dispositif de boîte de vitesse suivant la revendication 1, **caractérisé en ce que** le dispositif de capteurs (4) est raccordé à un circuit de commande du dispositif mécatronique par l'intermédiaire d'une carte de circuits imprimés flexible (10).

3. Dispositif de boîte de vitesse suivant la revendication 1 ou 2, **caractérisé par** des éléments de serrage (19, 20) situés sur le boîtier mécatronique (3), permettant un appui flexible en position du dispositif de capteurs (4) et exerçant une contrainte sur ce dernier.

4. Dispositif de boîte de vitesse suivant l'une des revendications 1 à 3, **caractérisé par** au moins une pointe de centrage (11) sur le dispositif de capteurs (4), pointe qui, en pénétrant par une ouverture (13) dans le boîtier mécatronique (3), fait prise dans une ouverture d'ajustage (12) correspondante sur le carter de boîte de vitesse (1).

5. Dispositif de boîte de vitesse suivant l'une des revendications 1 à 3, **caractérisé par** au moins une pointe de centrage (16) sur le carter de boîte de vitesse (1), pointe qui, en traversant une ouverture (13) dans le boîtier mécatronique (3), fait prise dans une ouverture d'ajustage correspondante (15) sur le dispositif de capteurs (4).

6. Dispositif de boîte de vitesse suivant l'une des revendications 1 à 5, **caractérisé par** des oeillets de vissage (14) sur le boîtier de capteur (9), qui entourent, avec un jeu d'ajustage, des goujons de vissage, aptes à être reliés au boîtier mécatronique (3).
